# EUROPEAN PATENT APPLICATION

(11) **EP 4 776 755 A1**
(43) Date of publication of application: **15.07.2026**
(21) Application number: 24862971.9
(22) Date of filing: 19.06.2024
(51) Int. Cl.: H05B 3/28, H05B 3/03, G03B 17/55, G03B 17/12, H05B 3/18, H05B 3/34, H05B 3/00, H05B 3/14

(54) **HEATING MEMBER AND CAMERA MODULE COMPRISING SAME**

(30) Priority: 07.09.2023 KR 20230119314; 09.11.2023 KR 20230154907
(71) Applicant: LG Innotek Co., Ltd., Seoul 07796 (KR)
(72) Inventor: KIM, Do Hyeon, Seoul 07796 (KR); HONG, Beom Sun, Seoul 07796 (KR); OH, Joon Jae, Seoul 07796 (KR)
(74) Representative: DREISS Patentanwälte PartG mbB
(86) International application number: PCT/KR2024/008472
(87) International publication number: WO 2025/053388

(57) **Abstract**

This heating member comprises: a first substrate; a second substrate disposed on the first substrate; and a heating layer disposed between the first substrate and the second substrate, wherein the heating layer comprises conductive particles; a polymer covering the conductive particles; and a plurality of electrodes; and the first substrate and the second substrate have different thicknesses.

## Description

### [Technical Field]

The teachings in accordance with exemplary and non-limiting embodiments of the present invention relate generally to a heating member and a camera module comprising same.

### [Background Arts]

Recently, ultra-compact camera modules have been developed and are widely used in small electronic devices such as smartphones, laptops, and gaming consoles.

With the widespread adoption of automobiles, miniature cameras are now extensively employed not only in small electronic devices but also in vehicles. For instance, vehicles are equipped with dashcam cameras for protection or to provide objective evidence in the event of an accident, rear-view cameras enabling drivers to monitor blind spots via a screen to ensure safety when reversing, and perimeter detection cameras capable of monitoring the vehicle's surroundings.

The camera comprises a lens, a lens barrel housing the lens, an image sensor that converts an image of a subject gathered by the lens into an electrical signal, and a printed circuit board on which the image sensor is mounted. A housing forming the exterior of the camera is constructed with a fully sealed structure to prevent internal components from contamination by foreign substances, including moisture.

In the case of the camera module, as it is disposed on the exterior of the vehicle and is significantly affected by the outside air, frost, condensation, and icing that frequently occur on the lens during the winter season. When frost, condensation, and icing occur on the lens, there is an issue that the performance of the camera module is significantly degraded.

### [Detailed Description of Invention]

### [Technical Subject]

This embodiment provides a heating member and a camera module comprising the same, which can rapidly remove frost or ice formation occurring on the lens surface via a heating function and improve heating efficiency.

### [Technical Solution]

A heating member according to an exemplary embodiment of the present invention may comprise: a first substrate; a second substrate disposed on the first substrate; and a heating layer disposed between the first substrate and the second substrate, wherein the heating layer comprises: conductive particles; a polymer covering the conductive particles; and a plurality of electrodes; and the first substrate and the second substrate have different thicknesses.

Preferably, but not necessarily, one surface of the first substrate may directly contact the plurality of electrodes, and an adhesive layer may be formed on the other surface of the first substrate.

Preferably, but not necessarily, the thickness of the first substrate may be thinner than that of the second substrate.

Preferably, but not necessarily, the thermal conductivity of the first substrate may be greater than that of the second substrate.

Preferably, but not necessarily, the thermal conductivity of the adhesive layer may be greater than that of the second substrate.

Preferably, but not necessarily, the thermal conductivity of the adhesive layer may be greater than that of the first substrate.

Preferably, but not necessarily, the thickness of the adhesive layer may be greater than that of the first substrate and thinner than that of the second substrate.

A camera module according to this embodiment may comprise: a first body; a lens module disposed within the first body, comprising a barrel and a lens disposed within the barrel; a substrate module disposed within the first body; and a heating member connected at one end to the surface of the lens and at the other end to the substrate module to provide heat to the lens, wherein the heating member comprises a first substrate and a second substrate with a heating layer disposed therebetween, and the thicknesses of the first substrate and the second substrate are different from each other.

Preferably, but not necessarily, the first substrate may be disposed relatively closer to the surface of the lens than the second substrate.

Preferably, but not necessarily, the thickness of the first substrate may be thinner than that of the second substrate.

### [Advantageous Effects]

This embodiment offers the advantage of rapidly removing frost or ice formation on the lens surface through heat generated by the heating member.

Specifically, by adjusting the thicknesses of the first and second substrates, heat can be not only readily transmitted towards the lens but also, by preventing heat loss to other areas, the heating efficiency of the lens can be enhanced.

Furthermore, forming a network within the heating layer using conductive filler and conductive wire can reduce the required amount of conductive filler within the heating layer compared to conventional methods, offer the advantage of lowering manufacturing costs and improve the electrical characteristics of the heating layer.

### [Brief Description of Drawings]

FIG. 1 is a perspective view of a vehicle according to an embodiment of the present invention.
FIG. 2 is a cross-sectional view of a camera module according to a first embodiment of the present invention.
FIG. 3 is a plan view showing a portion of a heating member according to a first embodiment of the present invention.
FIG. 4 is a sectional view along line A-A' of FIG. 3.
FIG. 5 is a cross-sectional view of the heating member according to a second embodiment of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

Furthermore, the terms used in the embodiments of the present invention are intended to explain the embodiments and are not intended to limit the invention.

In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

The term "optical axis direction" as used hereinafter is defined as the optical axis direction of the lens. Meanwhile, the "optical axis direction" may correspond to the "vertical direction", "z-axis direction", etc.

Hereinafter, the present invention will be described in greater detail with reference to the accompanying drawings.

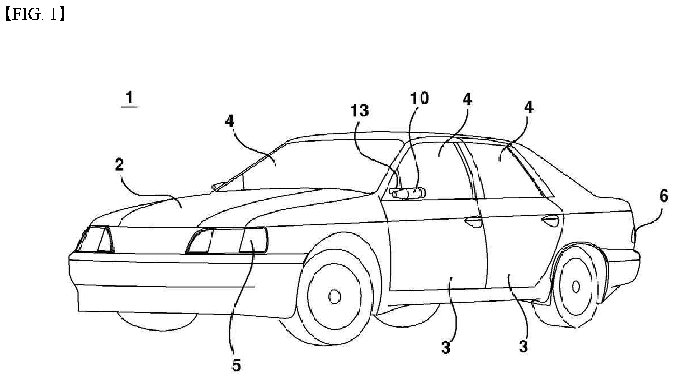

FIG. 1 is a perspective view of a vehicle according to an embodiment of the present invention.

Referring to FIG. 1, a vehicle (1) according to an embodiment of the present invention may comprise a body (2), a door (3), glass (4), headlamps (5), tail lamps (6), and a camera module (10).

The body (2) may constitute the exterior component of the vehicle (1). The body (2) may adopt various forms, such as a frame type or a monocoque type. One or more of the doors (3) may be coupled to the side of the body (2). Furthermore, the glass (4) may be coupled to the front and rear upper portions of the body (2) (where pillars are formed) and to the door (3). The headlamp (5) may be mounted on the front lower portion of the body (2). The rear portion of the lower part of the body (2) may have the tail lamp (6) mounted thereon.

A camera module (10) may be installed on the side of the body (2) or on one or more of the doors (3), specifically the door disposed at the front. The camera module (10) may be installed in front of the glass (4) coupled to the door (3). That is, in the vehicle (1) of this embodiment, the side mirror may be replaced by the camera module (10).

The camera module (10) is capable of capturing images of the rear areas on both sides of the vehicle. The images captured by the camera module (10) may be electrically connected to a display portion (not shown) via an electronic control unit (ECU), etc. Therefore, the images captured by the camera module (10) may be controlled by the electronic control unit (ECU) and reproduced on the display unit.

An interior space for a driver may be formed within the body (2). A display portion may be installed within the body (2). The display portion may output the images captured by the camera module (10). The display portion may be installed on the dashboard (not shown) within the body (2).

The installation configuration of the camera module (10) within the vehicle (1) is exemplary, and the camera module (10) may be used in one or more of the vehicle's (1) front camera, side camera, rear camera, and black box.

Hereinafter, the camera module according to the first embodiment of the present invention is described with reference to the drawings.

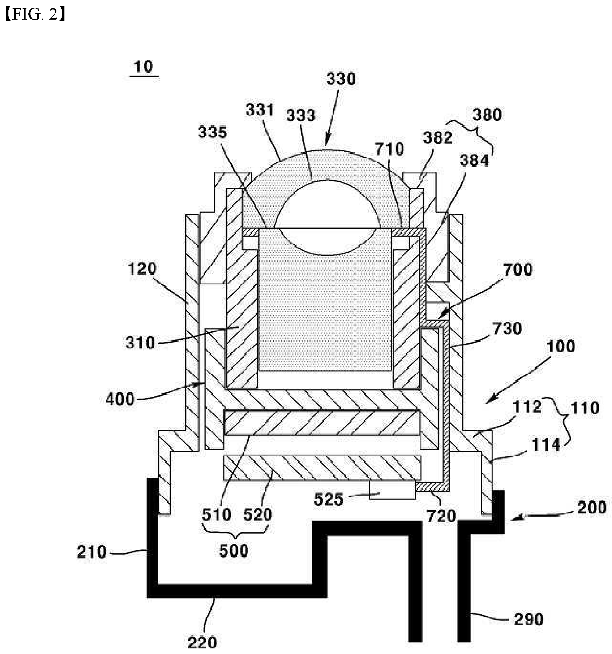

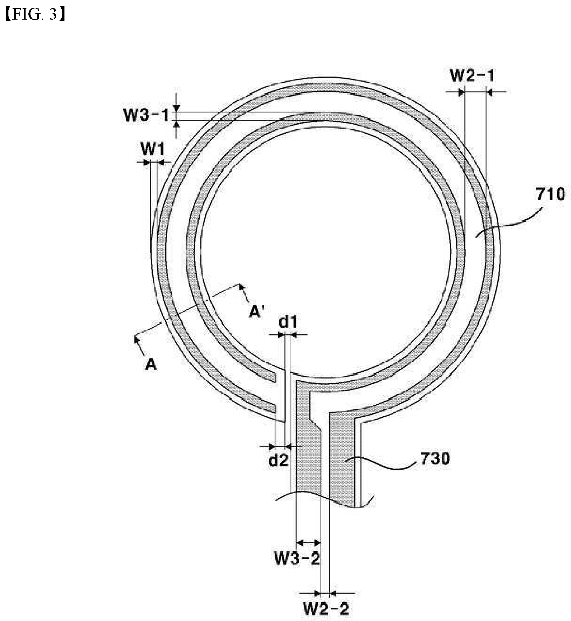

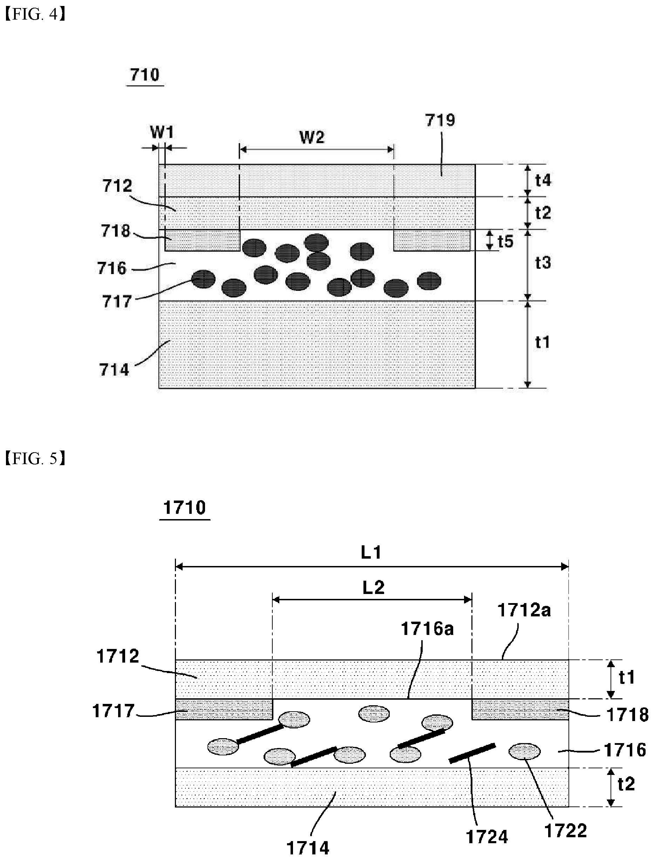

FIG. 2 is a cross-sectional view of the camera module according to the first embodiment of the present invention, FIG. 3 is a plan view showing a portion of the heating member according to the first embodiment of the present invention, and FIG. 4 is a sectional view along line A-A' in Figure 3.

Referring to FIGS. 2 to 4, a camera module (10) according to the first embodiment of the present invention may comprise a first body (100), a second body (200), a lens module (300), a lens holder (400), a substrate module (500), and a heating member (700).

The first body (100) may form the external shape of the camera module (10). The first body (100) may be named either a front body, an upper housing, or a first housing. A space may be formed within the first body (100) to accommodate the lens module (300), the lens holder (400), and the substrate module (500).

The first body (100) may include a body portion (110) and a protrusion (120). The body portion (110) and the protrusion (120) may be formed integrally.

The body portion (110) may be formed from a metallic material. The body portion (110) may be disposed atop the second body (200). The body portion (110) may be coupled to the second body (200). The lower end of the body portion (110) may be fixed to the second body (200). The body portion (110) may be joined to the second body (200) by welding. Alternatively, the body portion (110) may be joined to the second body (200) by adhesive or fusion bonding.

The body portion (110) may be formed as a rectangular shape with an open bottom. In this case, the corners of the body portion (110) may be formed rounded. The body portion (110) may comprise an upper plate (112) and a first side plate (114) extending downward from the edge of the upper plate (112). The upper plate (112) may be formed in a rectangular shape. The upper plate (112) may extend outward from the lower outer peripheral surface of the protrusion (120). The first side plate (114) may extend downward from the outer edge of the upper plate (112). The first side plate (114) may be provided in plurality. The first side plate (114) may comprise four side plates. The first side plate (114) may be formed in a rectangular plate shape. For example, the first side plate (114) may include a first-1 side plate and a first-2 side plate, a first-3 side plate disposed opposite the first-1 side plate, and a first-4 side plate disposed opposite the first-2 side plate. The first side plate (114) may include first-1 to first-4 corners disposed respectively between the first-1 to first-4 side plates. Each of the first-1 to first-4 corners may include a rounded shape at least in part.

A space portion may be formed within the body portion (110) to be partitioned from other areas. The space portion may be open at the bottom and covered at the top by the protrusion (120) and the lower surface of the lens module (300).

The first body (100) may include a protrusion (120). The protrusion (120) may be formed from a metallic material. The protrusion (120) may have a circular cross-sectional shape. The protrusion (120) may be disposed on the body portion (110). The protrusion (120) may extend upward from the upper surface of the body portion (110). The protrusion (120) may be integrally formed with the body portion (110). In a variant, the protrusion (120) may be coupled to the body portion (110). In this case, the protrusion (120) may be fixed to the body portion (110) by an adhesive. The protrusion (120) may internally accommodate the lens module (300). A space may be formed at the center of the protrusion (120) for the lens module (300) to be coupled. The lens module (300) may be disposed within the space in the protrusion (120).

The camera module (10) may comprise a second body (200). The second body (200) may be named as any one of a rear body, lower housing, second housing, or rear cover. The second body (200) may be formed as a rectangular shape with an open top. The second body (200) may be formed from a metallic material. The second body (200) may be disposed beneath the first body (100). The second body (200) may be coupled to the first body (100). The second body (200) may form an internal space through coupling with the first body (100). The second body (200) may include a space portion with an upper surface opened.

The second body (200) may include a lower plate (220). The lower plate (220) may face the upper plate (114) of the first body (100) in the optical axis direction. The lower plate (220) may be spaced apart from the upper plate (114) of the first body (110) in the optical axis direction. The lower plate (220) may be parallel to the upper plate (114) of the first body (100). The lower plate (220) may be formed in a rectangular shape. In this case, the corners of the lower plate (220) may include a rounded shape in at least some portions.

The second body (200) may include a second side plate (210). The second side plate (210) may extend from the lower plate (220). The second side plate (210) may extend upwards from the outer edge of the lower plate (220). A shield member (not shown) may be disposed on the second side plate (210). The shield member may be in surface-contact with the inner surface of the second side plate (210). The upper end of the second side plate (210) may be joined to the first body (100). The inner surface of the second side plate (210) may be disposed to wrap around the outer surface of the first side plate (114). The inner surface of the second side plate (210) and the outer surface of the first side plate (114) may be mutually joined by at least one of welding, adhesive bonding, or fusion bonding.

The second body (200) may include a connector extraction portion (290). The connector extraction portion (290) may have a shape projecting downward from the lower surface of the lower plate (220). The connector extraction portion (290) may be dispose to internally house a connector (490) described below. The connector extraction portion (290) may be formed from a metallic material. The connector extraction portion (290) may be shaped of an internally hollowed pipe.

The camera module (10) may include a lens module (300). The lens module (300) may be coupled to the first body (100). The lens module (300) may be coupled into a hole in the protrusion (120). The lens module (300) may be disposed such that at least a portion thereof is disposed within the protrusion (120), and the remaining portion is disposed to protrude above the first body (100).

The lens module (300) may comprise a barrel (310) and one or more lenses (330) accommodated within a barrel (310). The lens (330) may be disposed to face an image sensor within a substrate module (500), described later, along the optical axis direction. The lens (330) may be optically aligned with the image sensor. The lens (330) may be provided in plurality, disposed within the barrel (310) along the optical axis direction at mutual intervals. The outermost lens among the plurality of lenses (330) may be exposed towards the upper side of the camera module (10).

The barrel (310) may comprise an internally formed space with upper and lower surfaces opened. The lens (330) may be disposed within the space of the barrel (310). The barrel (310) may have a circular cross-sectional shape. The barrel (310) may be made of a metallic material.

The lens module (300) may include a retainer (380). The retainer (380) may be coupled to the outer surface of the barrel (310). The retainer (380) may be threadedly coupled to the barrel (310). Alternatively, the retainer (380) and the barrel (310) may be mutually coupled via epoxy. The retainer (380) may be coupled to the upper end of the barrel (310). The retainer (380) may be disposed at least partially within the first body (100). The incident surface of the outermost lens among the lenses (330) may protrude more upwardly than the upper surface of the retainer (380).

The combination structure of the barrel (310) and retainer (380) is exemplary, and the camera module (10) may be implemented as an integral structure where the barrel (310) and retainer (380) form a single unit.

The retainer (380) may have a ring-shaped cross-section. The retainer (380) may be disposed such that at least a portion thereof covers the edge of the outermost lens. The retainer (380) may be disposed to wrap around the edge of the outermost lens. The retainer (380) may be disposed to cover the edge of the incident surface of the outermost lens. The retainer (380) may contact a portion of the incident surface of the outermost lens.

The retainer (380) may include a first region (382) whose lower surface supports the incident surface of the outermost lens, and a second region (384) extending downward from the edge of the first region (382). The second region (384) may be disposed between the barrel (310) and the first body (100). The first region (382) and the second region (384) may be disposed mutually perpendicular to each other.

The camera module (10) may include a lens holder (400). The lens holder (400) may be disposed between the first body (100) and the barrel (310). The lens holder (400) may be disposed to enclose the outer surface of the barrel (310). The lens holder (400) may be formed in a cylindrical shape having a hollow extending from the upper surface to the lower surface. A thread or a thread groove may be formed on the inner surface of the lens holder (400). A threaded groove or thread may be formed on the outer surface of the barrel (310) facing the inner surface of the lens holder (400). The barrel (310) may be threaded into the lens holder (400).

A substrate coupling portion, to which a first substrate (510) of the substrate module (500) described later is coupled, may be formed on the lower surface of the lens holder (400). The substrate coupling portion may have a recessed groove shape that is concave upwards relative to other areas.

The lens holder (400) may be omitted. In this case, the substrate module (500) may be coupled within the space of the first body (100).

The camera module (10) may include a substrate module (500). The substrate module (500) may be disposed within the space of the camera module (10). The substrate module (500) may be disposed between the first body (100) and the second body (200).

The substrate module (500) may comprise a first substrate (510), a second substrate (520), and a connecting substrate (not shown).

The first substrate (510) may be a printed circuit board (PCB). An image sensor may be disposed on the upper surface of the first substrate (510). The image sensor may be disposed on the first substrate (510) such that it faces the lens (330) within the lens module (300) along the optical axis. The first substrate (510) may be disposed within the substrate coupling portion of the lens holder (400).

The second substrate (520) may be a printed circuit board (PCB). The second substrate (520) may be disposed spaced apart from the first substrate (510) in the optical axis direction. The second substrate (520) may be disposed beneath the first substrate (510). A connector (not shown) may be coupled to the underside of the second substrate (520). The upper end of the connector may be soldered to the lower surface of the second substrate (520).

A terminal (525) may be disposed on the lower surface of the second substrate (520). The terminal (525) may be electrically and physically connected to the lower end of the heating member (700) described below.

The second substrate (520) may be electrically connected to the first substrate (510). The second substrate (520) and the first substrate (510) may be electrically connected via the connecting substrate. The connecting substrate may be a flexible printed circuit board (FPCB). The connecting substrate may be coupled at its upper and lower ends to the first board (510) and the second board (520), respectively, thereby electrically connecting the first board (510) and the second board (520).

The substrate module (500) may further include a shield can (not shown) disposed between the first substrate (510) and the second substrate (520). The first substrate (510) and the second substrate (520) may be spaced apart in the optical axis direction via the shield can.

The following describes the heating structure of the lens according to an embodiment of the present invention.

The camera module (10) may include a heating member (700). The heating member (700) may provide heat to the surface of the lens (330). The heating member (700) may provide heat to the surface of the outermost lens amongst a plurality of lenses (330). Consequently, frost formed on the surface of the lens (330) may be removed.

The heating member (700) may be a PTC heater (positive temperature coefficient heater). The heating member (700) may have one end connected to the surface of the lens (330) and the other end connected to the substrate module (500).

Specifically, the outermost lens (330) disposed on the barrel (310) may include an incident surface (331) where light enters and an an exit surface (333) facing the incident surface (331) and through which the incident light is emitted towards the image sensor, and a connecting surface (335) connecting the incident surface (331) and the exit surface (333). The connecting surface (335) may form the lower surface of the lens (330). The connecting surface (335) may form the side surface of the lens (330). One end of the heating member (700) may be coupled to the connecting surface (335).

The connecting surface (335) may comprise a plurality of surfaces disposed in a mutually stepped manner in the optical axis direction. The plurality of surfaces may comprise a first surface and a second surface disposed on the inner side of the first surface. The plurality of surfaces may comprise a first side surface connecting the first surface and the second surface. The plurality of surfaces may include a second side surface disposed on the outer side of the first surface. The first surface may be disposed on the upper side relative to the second surface. One end of the heating member (700) may be coupled to the first surface. One end of the heating member (700) may be coupled to the second side surface.

The heating member (700) may be in the form of a film. The heating member (700) may be a substrate with a circuit pattern formed thereon. The heating member (700) may be a flexible printed circuit board (FPCB).

The heating member (700) may include an upper end portion (710), a lower end portion (720), and a connecting portion (730). The upper end portion (710) may be disposed at the upper end of the heating member (700) and may be bonded to the surface of the lens (330). The upper end portion (710) may have a ring-shaped cross-section, as shown in FIG. 3, and may be bonded to the connecting surface (335). The upper end portion (710) may generate heat through power supply. The upper end portion (710) may have a circular shape corresponding to the configuration of the lens (330) or the barrel (310).

The lower end portion (720) may be disposed at the lower end of the heating member (700) and may be coupled to the substrate module (500). The lower end portion (720) may be coupled to the lower surface of the second substrate (520) of the substrate module (500). The lower end portion (720) may be coupled to the terminal (525) disposed on the lower surface of the second substrate (520). Consequently, power may be supplied from the substrate module (500) to the heating member (700), or driving signals may be transmitted and received.

The connecting portion (730) may connect the upper end portion (710) and the lower end portion (720). The connecting portion (730) may include an area bent at least once. The connecting portion (730) may be disposed, at least in part, between the outer surface of the barrel (310) and the inner surface of the first body (100). A hole (not shown) may be formed in the barrel (310) to allow the connecting portion (730) to pass therethrough.

As shown in FIG. 3, the width (W3-2) of the electrode of the connecting portion (730) may be greater than the width (W3-1) of the electrode of the upper end portion (710). Accordingly, power loss from the substrate module (500) can be minimized.

The upper end portion (710) may comprise a plurality of electrodes spaced apart radially. Similarly, the connection portion (730) may include a plurality of electrodes each connected to the plurality of electrodes. The gap (W2-1) between the plurality of electrodes in the upper end portion (710) may be larger than the gap (W2-2) between the plurality of electrodes in the connection portion (730). Accordingly, at the connection portion (730), power loss can be minimized using relatively wider electrodes, while at the upper end portion (710), the gap (W2-1) between the plurality of electrodes can be maximized to enhance thermal efficiency in the heat generation area.

Between the connecting portion (730) and the upper end portion (710), there may be a region where the width of the electrode decreases. Where the width of the electrode (W3-2) at the connecting portion (730) abruptly decreases to the width of the electrode (W3-1) at the upper end portion (710), cracks may occur due to the abrupt change in current, such that, in this embodiment, as illustrated in FIG. 3, a region where the width gradually decreases between the connection portion (730) and the upper end portion (710) is formed to prevent cracking.

As illustrated in FIG. 3, the upper end portion (710) may be connected to the connecting portion (730), and the other end of the upper end portion (710) may be spaced apart from the connecting portion (730) by a first spacing distance (d1). Accordingly, assembly reliability can be ensured when attaching the heating member (700) to the lens (330). The other end of the upper end portion (710) and the end of the electrode within the upper end portion (710) may be spaced apart by a second spacing distance (d2). Consequently, this prevents the electrode within the upper end portion (710) from being exposed externally, thereby enhancing the thermal transfer reliability of the heating member (700).

Here, to ensure assembly reliability, the first spacing distance (d1) may be smaller than the second spacing distance (d2). Furthermore, the radial width (W1) between the electrode disposed radially outward among the plural electrodes within the upper end portion (710) and the outer peripheral surface of the upper end portion (710) may be smaller than the second spacing distance (d2). Moreover, the radial spacing (W2-1) between the plurality of electrodes within the upper end portion (710) may be greater than the first spacing distance (d1). As illustrated in FIG. 4, the heating member (700) may comprise a first substrate (712), a second substrate (714), a heating layer (716), and an adhesive layer (719).

The first substrate (712) and the second substrate (714) may each be formed in a film shape, forming a space therebetween in which the heating layer (716) is formed. The first substrate (712) may be disposed relatively closer to the surface of the lens (330) than the second substrate (714). Accordingly, the first substrate (712) may be named the upper substrate, and the second substrate (714) may be named the lower substrate.

The first substrate (712) and the second substrate (714) may be made of different materials. For example, the material of the first substrate (712) may be polyimide. The material of the second substrate (714) may be PET.

With respect to the optical axis direction, the thickness (t2) of the first substrate (712) may be smaller than the thickness (t1) of the second substrate (714). For example, the thickness (t2) of the first substrate (712) may be one-quarter or less of the thickness (t1) of the second substrate (714). The thickness (t2) of the first substrate (712) may be 20 µm to 30 µm. The thickness (t2) of the second substrate (714) may be 80 µm to 120 µm. According to the above structure, by forming the thickness of the first substrate (712), which is relatively closer to the surface of the lens (330), thin, heat generated from the heating layer (716) can be efficiently transferred to the surface of the lens (330). Furthermore, heat loss through the second substrate (714) can be prevented.

The thermal conductivity of the first substrate (712) may be greater than that of the second substrate (714). Consequently, heat can be concentrated towards the lens (330) via the first substrate (712).

The heating layer (716) may be disposed between the first substrate (712) and the second substrate (714). The heating layer (716) may comprise a polymer, conductive particles (717) disposed within the polymer, and an electrode (718). The polymer may be disposed to envelop the conductive particles (717).

The electrode (718) may be disposed on the surface of the polymer. The electrode (718) may comprise a plurality of electrodes having different polarities. The heating layer (716) can generate heat due to a change in resistance of the conductive particles (717) caused by power supply from the substrate module (500). One surface of the first substrate (712) may be in direct contact with the plurality of electrodes (718).

As illustrated in FIG. 4, the radial gap (W1) between any one of the plural electrodes (718) and either the inner or outer surface of the heating layer (716) may be smaller than the gap (W2) between the plural electrodes (718). Accordingly, heat transfer towards the lens (330) may be facilitated more readily than towards the side of the heating member (700).

Furthermore, the thickness (t5) of the electrode (718) in the optical axis direction may be greater than the diameter of the conductive particle (717). Accordingly, heat transfer may be more readily facilitated into the region between the plurality of electrodes (718).

The thickness (t3) of the heating layer (716) may be greater than the thickness (t2) of the first substrate (712) and less than or equal to the thickness (tl) of the second substrate (714).

The adhesive layer (719) may be disposed on the first substrate (712). The adhesive layer (719) may be formed on the other surface facing one surface of the first substrate (712) that contacts with the electrode (718). An adhesive may be disposed on the surface of the adhesive layer (719). The heating member (700) and the lens (330) may be bonded together via the adhesive layer (719). The thickness (t4) of the adhesive layer (719) may be greater than the thickness (t2) of the first substrate (712). The thickness (t4) of the adhesive layer (719) may be thinner than the thickness (t1) of the second substrate (714). The thickness of the adhesive layer (719) may be between 40 µm and 60 µm. The material of the adhesive layer (719) may be alumina or a non-electrically conductive material of the carbon series.

The thermal conductivity of the adhesive layer (719) may be greater than that of the second substrate (714). The thermal conductivity of the adhesive layer (719) may be greater than that of the first substrate (712). Accordingly, heat may be concentrated towards the lens (330) through the adhesive layer (719).

Meanwhile, a release film (not shown) may be disposed on the adhesive layer (719), and the strength of the heating member (700) may be reinforced through the release film.

According to the above structure, the thermal resistance is inversely proportional to the length of the heat transfer path, as per the thermal resistance formula, such that the heating member (700) according to this embodiment offers the advantage of not only facilitating heat transfer towards the lens (330) through thickness adjustment of the first substrate (712) and second substrate (714), but also preventing heat loss to other areas, thereby enhancing the heating efficiency of the lens (330).

The following describes the heating structure of the lens according to a second embodiment of the present invention.

FIG. 5 is a cross-sectional view of a heating member according to the second embodiment of the present invention.

Referring to FIG. 5, the heating member (1700) may include a first substrate (1712), a second substrate (1714), and a heating layer (1716).

The first substrate (1712) and the second substrate (1714) may each be formed in a film shape, forming a space therebetween in which the heating layer (1716) is formed. The first substrate (1712) may be disposed relatively closer to the surface of the lens (1330) than the second substrate (1714). Accordingly, the first substrate (1712) may be named the upper substrate, and the second substrate (1714) may be named the lower substrate.

An adhesive layer containing an adhesive may be formed between the first substrate (1712) and the lens (1330), enabling the heating member (1700) to be bonded to the surface of the lens (1330). A release film (not shown) may be disposed on the adhesive layer, and the strength of the heating member (1700) may be reinforced through the release film.

The first substrate (1712) and the second substrate (1714) may be of different materials. For example, the material of the first substrate (1712) may be polyimide. The material of the second substrate (1714) may be PET. However, this is merely illustrative; the material of the first substrate (1712) and the material of the second substrate (1714) may be identical.

With respect to the optical axis direction, the thickness (t1) of the first substrate (1712) may be smaller than the thickness (t2) of the second substrate (1714). Accordingly, by forming the thickness of the first substrate (1712), which is relatively closer to the surface of the lens (1330), thin, heat generated from the heating layer (1716) can be efficiently transferred to the surface of the lens (1330). Moreover, forming the second substrate (1714) thickly can minimize heat loss occurring to the exterior.

The thermal conductivity of the first substrate (1712) may be greater than that of the second substrate (1714). Consequently, heat may be concentrated towards the lens (1330) through the first substrate (1712).

The heating layer (1716) may be disposed between the first substrate (1712) and the second substrate (1714). The heating layer (1716) may comprise a polymer, a conductive filler (1722) disposed within the polymer, a conductive wire (1724) disposed within the polymer, and electrodes (1717, 1718). The polymer may have a predetermined thickness in the vertical direction and may be disposed to envelop the conductive filler (1722) and the conductive wire (1724). The vertical thickness of the polymer may be greater than the thickness of the first substrate (1712) or the thickness of the second substrate (1714).

The electrodes (1717, 1718) may be disposed on the surface of the polymer. The electrodes (1717, 1718) may be disposed between the first substrate (1712) and the polymer. The electrodes (1717, 1718) may be disposed on the surface of the polymer facing the first substrate (1712). The electrodes (1717, 1718) may be disposed on the surface of the first substrate (1712) facing the polymer. One surface of the first substrate (1712) may be in direct contact with the plurality of electrodes (1718).

The electrodes (1717, 1718) may comprise a plurality of electrodes having different polarities. The electrodes (1717, 1718) may comprise a first electrode (1717) and a second electrode (1718) having a polarity opposite to that of the first electrode (1717). The heating layer (1716) may generate heat due to a change in resistance of the conductive filler (1722) and the conductive wire (1724), through power supply provided via the substrate module (1500) and the first electrode (1717, 1718).

With respect to a direction perpendicular to the optical axis, the gap (L2) between said plurality of electrodes (1717, 1718) may be smaller than the width (L1) of the first substrate (1712) or the second substrate (1714). The first electrode (1717) and the second electrode (1718) may each be disposed adjacent to both sides of the first substrate (1712). Consequently, heat transfer towards the lens (1330) may be facilitated more readily than towards the sides of the heating member (1700).

Moreover, the thickness of the electrodes (1717, 1718) in the optical axis direction may be greater than the diameter of the conductive filler (1722). Consequently, heat transfer to the region between the plurality of electrodes (1717, 1718) can be facilitated.

The conductive filler (1722) may be disposed within the polymer and may generate heat through a change in resistance when power is supplied via the electrodes (1717, 1718). The conductive filler (1722) may have a spherical shape. The conductive filler (1722) may be formed with a circular or elliptical cross-section.

The conductive wire (1724) may be disposed within the polymer. The conductive wire (1724) may have a wire shape. The conductive wire (1724) may have a different aspect ratio (the ratio of height to width) compared to the conductive filler (1722). The aspect ratio of the conductive wire (1724) may be greater than that of the conductive filler (1722).

The material of the conductive wire (1724) may comprise one or more selected from the group consisting of carbon fiber, silver nanowire, and carbon nanotube (CNT).

The conductive wire (1724) may be disposed to connect a plurality of adjacent conductive fillers (1722). In this case, both ends of the conductive wire (1724) may be connected to two conductive fillers (1722) respectively. The heating layer (1716) may implement a conductive network via the conductive fillers (1722) and the conductive wire (1724). Accordingly, changes in electrical conductivity within the heating layer (1716) that may occur during thermal expansion of the polymer can be prevented, and the advantage exists that the PTC (positive temperature coefficient) effect can be maintained even at the phase transition temperature of the polymer. Furthermore, the connection structure of the conductive fillers (1722) via the conductive wire (1724) offers the advantage of reducing the amount of conductive filler required per unit area of the polymer compared to conventional methods where only conductive fillers are disposed within the polymer, thereby lowering manufacturing costs.

The conductive wire (1724) may also be disposed to connect the conductive filler (1722) and the electrodes (1717, 1718).

Only the conductive filler (1722) may be disposed between the plurality of electrodes (1717, 1718), and the conductive wire (1724) may not be disposed. The conductive wire (1724) may be disposed such that it does not overlap horizontally with the plurality of electrodes (1717, 1718). Consequently, electrical short circuits between the plurality of electrodes (1717, 1718) via the conductive wire (1724), which has a relatively large aspect ratio, can be prevented.

The density of the conductive wire (1724) per unit area within the polymer may be lower than the density of the conductive filler (1722) per unit area within the polymer. Because the thermal efficiency of power supply within the heating layer (1716) is higher for the conductive filler (1722) than for the conductive wire (1724) having a low expansion rate, more conductive fillers (1722) are disposed within the polymer than the conductive wire (1724) to thereby maintain the heating characteristics of the heating layer (1716) consistently.

According to the above structure, a network is formed within the heating layer via the conductive filler and the conductive wire. This reduces the amount of conductive filler required within the heating layer compared to conventional methods, thereby lowering manufacturing costs and improving the electrical characteristics of the heating layer.

The foregoing description of the components constituting the embodiments of the present invention as being combined or operating in combination does not imply that the invention is necessarily limited to these embodiments. That is to say, within the scope of the objectives of the present invention, all components may optionally be combined and operate in one or more ways. Furthermore, terms such as "comprising", "including", or "having" as described above, unless specifically stated otherwise, imply that the component may be present and should therefore be interpreted as allowing for the inclusion of other components rather than excluding them. All terms, including technical or scientific terms, unless otherwise defined, have the same meaning as generally understood by a person skilled in the art to which the invention pertains. Commonly used terms, such as those defined in dictionaries, should be interpreted in accordance with their meaning in the context of the relevant technology and, unless explicitly defined herein, should not be interpreted in an idealized or overly formalistic sense.

The foregoing description merely exemplifies the technical concept of the present invention. Those skilled in the art to which the present invention pertains will appreciate that various modifications and variations may be made without departing from the essential character of the invention. Therefore, the embodiments disclosed herein are intended to illustrate the technical concept of the invention, not to limit it, and the scope of the technical concept of the invention is not restricted by these embodiments. The scope of protection of the invention shall be interpreted by the appended claims, and all technical concepts within the scope equivalent thereto shall be interpreted as falling within the scope of the invention.

## Claims

1. A heating member comprising: a first substrate; a second substrate disposed on the first substrate; and a heating layer disposed between the first substrate and the second substrate, wherein the heating layer comprises: conductive particles; a polymer covering the conductive particles; and a plurality of electrodes, and
wherein the first substrate and the second substrate have different thicknesses.

2. The heating member of claim 1, wherein one surface of the first substrate directly contacts the plurality of electrodes, and an adhesive layer is formed on the other surface of the first substrate.

3. The heating member of claim 2, wherein the thickness of the first substrate is thinner than that of the second substrate.

4. The heating member of claim 3, wherein the thermal conductivity of the first substrate is greater than that of the second substrate.

5. The heating member of claim 2, wherein the thermal conductivity of the adhesive layer is greater than that of the second substrate.

6. The heating member of claim 2, wherein the thermal conductivity of the adhesive layer is greater than that of the first substrate.

7. The heating member of claim 2, wherein the thickness of the adhesive layer is greater than that of the first substrate and thinner than that of the second substrate.

8. A camera module comprising: a first body; a lens module disposed within the first body, comprising a barrel and a lens disposed within the barrel; a substrate module disposed within the first body; and a heating member having one end connected to a surface of the lens and another end connected to the substrate module to provide heat to the lens, wherein the heating member comprises a first substrate and a second substrate with a heating layer disposed therebetween, and the thicknesses of the first substrate and the second substrate are different from each other.

9. The camera module of claim 8, wherein the first substrate is disposed closer to the surface of the lens than the second substrate.

10. The camera module of claim 9, wherein the thickness of the first substrate is thinner than that of the second substrate.
